# EUROPEAN PATENT SPECIFICATION

(11) **EP 1 067 092 B1**
(45) Date of publication and mention of the grant of the patent: **09.07.2003**
(21) Application number: 00102113.8
(22) Date of filing: 04.02.2000
(51) Int. Cl.: C01B 15/047, B01J 35/00

(54) **A method for preparing a composition for titanium peroxide film**
Herstellungsverfahren für eine Zusammensetzung für Titanperoxidfilme
Procédé pour la préparation d'une composition pour des films de peroxyde de titane

(30) Priority: 05.07.1999 JP 18982499
(43) Date of publication of application: 10.01.2001
(73) Proprietor: Morioki Sangyo Company Limited, Setagaya-ku, Tokyo (JP)
(72) Inventor: Mori, Yoshiharu, Setagaya-ku, Tokyo (JP)
(74) Representative: HOFFMANN - EITLE

(56) References cited:
- EP-A- 0 846 494
- EP-A- 0 854 112
- EP-A- 0 876 907
- PATENT ABSTRACTS OF JAPAN vol. 1997, no. 12, 25 December 1997 (1997-12-25) & JP 09 217028 A (CATALYSTS &CHEM IND CO LTD), 19 August 1997 (1997-08-19)

## Description

### 1. Field of the invention

The invention relates to a method of preparing a composition for forming a titanium peroxide film, a composition for forming a titanium peroxide film, a titanium peroxide film and its use.

### 2. Prior art

Heretofore, the prior art has disclosed a method in which a composition for forming a titanium peroxide film is prepared by mixing a titanium hydrate gel with a peroxide composition. From the resulting composition titanium peroxide particles could be formed by calcination at a temperature of over 80 °C. Films made by calcinating and drying said composition show excellent adhesion to a substrate when coated thereon.

When exposed to weak ultraviolet rays from e.g. sunlight, a fluorescent lamp or a mercury lamp, such films coated on a substrate react such that noxious substances composed of organic compounds are oxidised and destroyed. Thus, said compositions have rapidly gained a reputation on the market as a photoctalyst allowing, by coating or impregnating substrates therewith, an oxidisation reaction excited by ultraviolet rays through a titanium peroxide film medium.

As described above, by absorbing photo-energy from weak ultra-violet rays, a titanium peroxide film on the surface of a substrate that is coated or impregnated therewith is activated such that pollutants including NO_{X} and CO₂ can be destroyed. In this manner, said composition and the films derived therefrom contributes to improving the purification of air and water. It may also be used for antibacterial and disinfecting reactions.

As set forth earlier, a photocatalyst utilising a titanium peroxide film medium as disclosed by the prior art requires ultraviolet rays emitted from sunlight, a fluorescent lamp or a mercury lamp. Hence, oxidisation by said photocatalyst fails to function where no light source is available. Said photocatalyst has, therefore, a disadvantage in that it cannot sufficiently disinfect the interior wall of a large structure such as a tunnel, a ballast tank or a dark room, as well as the inside of a night bus body, a chest of drawers or a shoe cabinet

Under these circumstances, it has been considered vitally important to invent a method of providing a titanium peroxide film which functions as an oxidation catalyst without requiring any light source as referred to above. It further seemed desirable to apply the film with an anti-bacterial metal medium.

### SUMMARY OF THE INVENTION

The invention provides a method for preparing an improved composition for forming a titanium peroxide film. According to the invention, particles of capsicin, magnetite and tourmaline are mixed with silica, whereby each component is suspended or dispersed in distilled water. The silica may also be used in the form of an aqueous solution. The resulting mixture is then compounded with a base comprising titanium hydrate gel and a peroxide composition. From the resulting composition titanium peroxide particles can be formed by calcination at a temperature higher than 80 °C.

In case a protective film is formed on the surface of a substrate coated or impregnated with the composition of the invention, said film serves as an oxidation catalyst reacting without any exterior light source.

The invention thus provides a method of preparing an improved composition for forming a titanium peroxide film, which like a photocatalyst has the effect of exciting anti-bacterial, or mold-proof reactions, as well as decay of pollutants and purification of air, even in the absence of ultraviolet light. Hence, it can be applied to the interior surface of a large structure which is not exposed to light, such as a tunnel, a ballast tank etc.

The invention also provides an improved composition for forming a titanium peroxide film having the effect of exciting anti-bacterial, or mold-proof reactions, as well as decay of pollutants and purification of air, even when applied to the interior surfaces of a variety of articles such as a wardrobe, a locker, as well as shoes etc., which normally are not exposed to a light source.

The invention by making use of capsicin also provides an improved composition for forming a titanium peroxide film with excellent insectcidal or generally pesticidal activity. Hence rats and ants can be prevented from damaging electric wires in circuits resulting in e.g. computer trouble or short circuits in general.

The invention furthermore provides an improved composition for forming a titanium peroxide film which prevents barnacles and oysters from adhering to culture nets or fixed shore nets, which are deposited deep in the sea and thus not reached by ultraviolet light. The invention hence also contributes to encouraging the fishery industry.

### DETAILED DESCRIPTION

According to the invention, a composition for forming a titanium peroxide film is prepared by mixing particles of capsicin, magnetite and tourmaline, with silica in distilled water. The thus obtained mixture is then compounded with a base comprising titanium hydrate gel and a peroxide in order to obtain a mixture which forms titanium peroxide particles by calcination at a temperature higher than 80 °C.

Said base is neutral or has a pH around 7. It is suitable for application to a non-acid resisting substrate. The base can be produced cheaply, yet excels in adhering to a substrate. It is commercially available under the brand names of "Peroxo-titanium (PTA composition)", "Peroxo-anatase sol (PS sol)" and "TPX sol", respectively.

Preferably, the invention utilises as a base "TPX sol". Said TPX sol is offered as a composition containing 0.85 wt. % titanium peroxide, diluted by 91.5 wt. % of distilled water. The base for forming titanium peroxide film is admixed with particles of capsicin, magnetite and tourmaline as well as a silica, all dispersed in distilled water.

The capsicin content of the final mixture is preferably within the range of from 0.01 to 15 wt. % based on the entire composition of the invention. The amount of capsicin in its raw material varies by natural conditions such as its country of origin and kind. Hence, the amount of capsicin is not necessarily confined in its application to the above-mentioned range.

Likewise, the magnetite particles are preferably mixed with the other components within the range from 10 to 40 wt. % based on the entire composition of the invention. However, the amount of magnetite particles is not confined in its application to the above-mentioned range.

The tourmaline particles are preferably mixed with the other components within the range from 0.5 to 15 wt. % based on the entire composition according to the invention. However, the amount of tourmaline particles is not confined in its application to the above-mentioned range.

Further, the silica is preferably mixed with the other components within the range from 1 to 5 wt. % based on the entire composition of the invention. However, the amount of silica is not confined in its application to the above-mentioned range.

Magnetite particles comprised in the composition of the invention generate electromagnetic waves of different wavelengths (a light source), when some energy is added to, or taken from the electrons of the magnetite causing them to depart from their natural orbit. Accordingly, a very small amount of ultraviolet light emitted from said particles affects titanium oxide such that its oxidisation is excited.

The lattice of the tourmaline particles has some magnetic polarity that is charged with electricity when subjected to pressure, whereby light is emitted. With the thus emitted light, the tourmaline particles contribute to exciting oxidisation of titanium oxide.

Any photocatalyst as heretofore disclosed in the prior art fails to provide an antibacterial or anti-mold effect unless exposed to ultraviolet rays. However, no such source of light, such as sunlight or light from a fluorescent lamp, is required for imparting these properties to any substrate which is coated or impregnated with the composition of the invention. The antibacterial, anti-mold effects, as well as air and water purification are enhanced with oxidisation excited by the composition of the invention.

### Example 1

A composition is prepared by mixing and agitating 15 wt. % of magnetite particles, 15 wt. % of tourmaline particles, 5 wt. % of silica and 1.5 wt. % of capsicin particles with 62.65 wt. % of distilled water composition. The composition is then compounded with 0.85 wt. % of a TPX sol.

Steel plates and a flexible plates of H300xW300xD6 mm were coated with the composition of the invention and compared to non-coated plates of the same kind. All plates were sunk into the sea deep enough to shade ultraviolet rays therefrom, so as to perform a regular examination thereof. 3 months later, see-weeds, barnacles and small shells were found adhering to the uncoated test plates, while said sea-weeds etc. were not discovered at all on the surfaces of the coated plates. After 6 months, favourable results were witnessed, that is, on the surfaces of the uncoated test plates, barnacles etc. turned out growing, while no adhering matter was visible on the surfaces of the coated test plates.

In this example the dissolving or dispersing effect of each component into a composition was enhanced with a small amount of methyl alcohol added to said distilled water. The same applies to the other embodiments.

### Example 2

A composition is prepared by mixing and agitating 10 wt. % of magnetite particles, 10 wt. % of tourmaline particles, 0.2 wt. % of silica and 2 wt. % of capsicin particles with 77 wt. % of distilled water. Said composition is then mixed with 0.85 wt. % of a commercially available TPX.

All surfaces of a height and up to 40cm depth of a covered polyvinyl container of H25xW40xD70cm were coated with this composition and dried at room temperature. Some roaches were placed in said container being positioned in the absence ultraviolet rays. It was observed that all roaches had gathered in the uncoated part of said container.

### Example 3

A composition according to the invention was prepared by mixing all components within the above-mentioned preferable ranges with the base of a TPX sol. Some samples were provided by coating the thus prepared compositions on an electric wire onto which cheese was uniformly pasted. While another electric wire on which only cheese was pasted without any of the composition was provided for comparison. It was observed that none of the wires coated with the composition were bitten by rats while the comparative electric wires were.

As established by the examples described above, the composition of the invention when coated and dried on the bottom of a large ship, the interior surface of a sewage ditch or an intake of sea water for a power plant etc. where no light reaches, can prevent the adherence of barnacles and oysters.

As set forth earlier, a composition of the invention utilises as its base TPX sol for providing titanium peroxide film. Hence, the composition of the invention maintains the excellent adherence of said TPX sol. Further, its coating process is simply such as spraying, and, its drying carried out at the normal temperature, so that both do not affect the adhering effect. Therefore, every component of the composition of the invention such as capsicin, magnetite and tourmaline particles, as well as silica is by no means isolated from the base. It follows that the effect of a photocatalyst attributed to the composition of the invention will not deteriorate over the long run.

## Claims

1. Method for producing a composition for forming a titanium peroxide film comprising the steps of admixing particles of capsicin, magnetite, tourmaline and silica, each dispersed in distilled water with a base comprising a titanium hydrate gel and a peroxide and calcinating the resulting product.

2. Composition obtainable according to claim 1.

3. Composition according to claim 2 comprising 0,01 to 15 wt% capsicin particles, 10 to 40 wt% magnetite particles, 0,5 to 15 wt% tourmaline particles and 1 to 5 wt% silica.

4. Method of forming an oxidation catalyst comprising the step of calcinating a composition according to claim 2 or claim 3 at a temperature of more than 80°C.

5. Method according to claim 4, wherein the composition is coated onto a substrate prior to the calcination step.

6. Oxidation catalyst obtainable according to claim 4 or claim 5.

7. Use of an oxidation catalyst according to claim 6 for oxidising organic compounds, as an anti-bacterial coating or for preventing the adherence of organisms to a surface.

## Patentansprüche

1. Verfahren zur Herstellung einer Zusammensetzung zur Ausbildung eines Titanperoxidfilms, das die Schritte des Vermischens von Teilchen aus Capsicin, Magnetit, Turmalin und Silica, die jeweils in destilliertem Wasser dispergiert sind, mit einer Base, die ein Titanhydratgel umfasst, und einem Peroxid, und Calcinieren des resultierenden Produkts umfasst.

2. Zusammensetzung, erhältlich gemäss Anspruch 1.

3. Zusammensetzung gemäss Anspruch 2, die 0,01-15 Gew.% Capsicinteilchen, 10-40 Gew.% Magnetitteilchen, 0,5-15 Gew.% Turmalinteilchen und 1-5 Gew.% Silica umfasst.

4. Verfahren zur Ausbildung eines Oxidationskatalysators, das den Schritt des Calcinierens einer Zusammensetzung gemäss Anspruch 2 oder 3 bei einer Temperatur von mehr als 80°C umfasst.

5. Verfahren gemäss Anspruch 4, worin die Zusammensetzung vor dem Calcinierungschritt auf ein Substrat aufgeschichtet wird.

6. Oxidationskatalysator, erhältlich nach Anspruch 4 oder 5.

7. Verwendung eines Oxidationskatalysators gemäss Anspruch 6 zur Oxidation organischer Verbindungen als antibakterielle Beschichtung oder zur Verhinderung der Anhaftung von Organismen an einer Oberfläche.

## Revendications

1. Procédé de production d'une composition destinée à former un fil de peroxyde de titane comprenant les étapes consistant à mélanger des particules de capsicine, de magnétite, de tourmaline et de silice, chacune étant dispersée dans de l'eau distillée avec une base comprenant un gel d'hydrate de titane et un peroxyde et à calciner le produit résultant.

2. Composition pouvant être obtenue selon la revendication 1.

3. Composition selon la revendication 2, comprenant 0,01 à 15 % en poids de particules de capsicine, 10 à 40 % en poids de particules de magnétite, 0,5 à 15 % en poids de particules de tourmaline et 1 à 5 % en poids de silice.

4. Procédé de formation d'un catalyseur d'oxydation comprenant l'étape consistant à calciner une composition selon la revendication 2 ou la revendication 3 à une température supérieure à 80°C.

5. Procédé selon la revendication 4, dans lequel la composition est appliquée sur un substrat avant l'étape de calcination.

6. Catalyseur d'oxydation pouvant être obtenu selon la revendication 4 ou la revendication 5.

7. Utilisation d'un catalyseur d'oxydation selon la revendication 6 en vue d'oxyder des composés organiques, en tant que revêtement antibactérien ou en vue d'empêcher l'adhérence d'organismes à une surface.
